# EUROPÄISCHE PATENTSCHRIFT

(11) **EP 3 560 797 B1**
(45) Veröffentlichungstag und Bekanntmachung des Hinweises auf die Patenterteilung: **29.09.2021**
(21) Anmeldenummer: 19165371.6
(22) Anmeldetag: 27.03.2019
(51) Int. Cl.: B62D 21/15

(54) **STRUKTURBAUTEIL FÜR EIN KRAFTFAHRZEUG**
STRUCTURAL COMPONENT FOR A MOTOR VEHICLE
COMPOSANT STRUCTURAL POUR UN VÉHICULE AUTOMOBILE

(30) Priorität: 27.04.2018 DE 102018110237
(43) Veröffentlichungstag der Anmeldung: 30.10.2019
(73) Patentinhaber: Audi AG, 85045 Ingolstadt (DE)
(72) Erfinder: Jäschke, Anja, 92339 Beilngries (DE)

(56) Entgegenhaltungen:
- EP-A1- 1 060 874
- DE-A1- 19 732 308
- DE-A1-102009 054 999
- DE-A1-102016 206 642

## Beschreibung

Die Erfindung betrifft ein Strukturbauteil für ein Kraftfahrzeug, umfassend eine zur Aufnahme von crashbedingt entstehender Deformationsenergie ausgebildete Deformationsstruktur, welche bei Einleitung von crashbedingt entstehender Deformationsenergie von einem ersten Deformationszustand in einen zweiten Deformationszustand überführbar ist, wobei die Deformationsstruktur einen durch ein Schaummaterial gebildeten Grundkörper umfasst. Entsprechende regelmäßig auch als Crash-Absorber bzw. Crash-Absorptionsbauteile bezeichnete Strukturbauteile für Kraftfahrzeuge sind in einer Vielzahl an unterschiedlichen Ausführungen aus dem Bereich der Kraftfahrzeugtechnik nach bekannt.

Entsprechende Strukturbauteile umfassen als wesentlichen Bestandteil eine zur Aufnahme von crash- bzw. kollisionsbedingt entstehender Deformationsenergie ausgebildete Deformationsstruktur, welche bei Einleitung von crashbedingt entstehender Deformationsenergie von einem undeformierten Zustand in einen deformierten Zustand überführbar ist. Die Deformationsstruktur kann, wie z. B. in DE 10 2006 055 560 A1 beschrieben, durch einen durch ein Schaummaterial gebildeten Grundkörper ausgebildet sein bzw. einen durch ein Schaummaterial gebildeten Grundkörper umfassen. Ein weiteres ähnliches Strukturbauteil ist von DE102009054999 bekannt.

Eine charakteristische Eigenschaft entsprechender Strukturbauteile ist die Aufnahmeeigenschaft von crash- bzw. kollisionsbedingt entstehender Deformationsenergie; hier besteht ein stetiger Verbesserungs- bzw. Weiterentwicklungsbedarf. In diesem Zusammenhang kommt einer Reduzierung der so genannten Restblocklänge und somit der Erhöhung des maximalen Deformationsvermögens besondere Bedeutung zu. Darüber hinaus wird z. B. eine Reduzierung des Gewichts des Strukturbauteils bei möglichst unveränderten strukturellen Eigenschaften sowie Energieaufnahme- bzw. Deformationseigenschaften angestrebt.

Hiervon ausgehend liegt der Erfindung die Aufgabe zugrunde, ein verbessertes Strukturbauteil für ein Kraftfahrzeug anzugeben.

Die Aufgabe wird durch ein Strukturbauteil für ein Kraftfahrzeug gemäß Anspruch 1 gelöst. Die hierzu abhängigen Ansprüche betreffen mögliche Ausführungsformen des Strukturbauteils. Das hierin beschriebene Strukturbauteil für ein Kraftfahrzeug ("Strukturbauteil") dient zur Aufnahme von crash- bzw. kollisionsbedingt, d. h. im Falle eines Crashs bzw. einer Kollision eines mit dem Strukturbauteil ausgestatteten Kraftfahrzeugs, entstehender Deformationsenergie. Das Strukturbauteil kann daher auch als Crash-Absorber bzw. Crash-Absorptionsbauteil bezeichnet bzw. erachtet werden. Das Strukturbauteil umfasst hierfür eine zur Aufnahme von crash- bzw. kollisionsbedingt entstehender Deformationsenergie ausgebildete Deformationsstruktur. Die Deformationsstruktur ist bei Einleitung von crash- bzw. kollisionsbedingt entstehender Deformationsenergie von einem ersten Deformationszustand, d. h. typischerweise einem undeformierten Zustand, in einen zweiten Deformationszustand, d. h. typischerweise einen gegenüber dem ersten Deformationszustand deformierten Zustand, überführbar. Die Überführung der Deformationsstruktur von dem ersten Deformationszustand in den zweiten Deformationszustand kann strukturbedingt vordefinierbar bzw. vordefiniert sein, sodass bei Einleitung von crash- bzw. kollisionsbedingt entstehender Deformationsenergie in die Deformationsstruktur eine (weitgehend) kontrollierbare bzw. kontrollierte Deformation der Deformationsstruktur erfolgt. Eine Deformation geht typischerweise mit einer Komprimierung der Deformationsstruktur, insbesondere in Richtung der eingeleiteten Deformationsenergie, einher; unter einer Deformation der Deformationsstruktur ist sonach entsprechend typischerweise eine Komprimierung der Deformationsstruktur zu verstehen.

Die Deformationsstruktur umfasst einen Grundkörper. Der Grundkörper ist durch ein Schaummaterial gebildet. Bei dem Schaummaterial kann es sich grundsätzlich um jedwedes deformierbare, eine offen- bzw. geschlossenzellige Schaumstruktur umfassendes Schaummaterial handeln. Bei dem Schaummaterial kann es sich demnach z. B. um einen offen- bzw. geschlossenzelligen Metall- oder Kunststoffschaum handeln. Konkreter denkbare Ausführungsformen des Schaummaterials werden beispielhaft weiter unten erläutert.

Der Grundkörper der Deformationsstruktur ist im Hinblick auf seine Aufnahmeeigenschaften von crash- bzw. kollisionsbedingt entstehender Deformationsenergie verbessert ausgeführt, als dieser wenigstens einen sich als längliche Ausnehmung zumindest abschnittsweise diesen, d. h. den Grundkörper, erstreckend ausgebildeten Freiraum aufweist. Ein jeweiliger Freiraum ist typischerweise einseitig offen ausgebildet, d. h. ein jeweiliger Freiraum erstreckt sich von einer Außenseite des Grundkörpers in das Innere des Grundkörpers bzw. vom Inneren des Grundkörpers bis zu einer Außenseite des Grundkörpers. Konkret kann ein jeweiliger Freiraum als, gegebenenfalls zylindrische, bohrungsartige bzw. -förmige längliche Ausnehmung in dem Grundkörper ausgebildet sein; ein entsprechender Freiraum kann sonach z. B. durch eine, gegebenenfalls zylindrische, bohrungsartige bzw. -förmige Grundform definiert sein.

Ein entsprechender Freiraum kann sich bezogen auf ein Längen-, Breiten-, oder Höhenmaß des Grundkörpers z. B. wenigstens 20%, insbesondere 20 - 50%, bevorzugt 50%, besonders bevorzugt mehr als 50%, durch den Grundkörper erstreckend ausgebildet sein. Mit anderen Worten kann sich ein entsprechender Freiraum in einer bestimmten Raumrichtung, d. h. z. B. einer die Höhe des Grundkörpers definierenden Raumrichtung, um wenigstens 20%, insbesondere 20 - 50%, bevorzugt 50%, besonders bevorzugt mehr als 50%, der Höhe des Grundkörpers durch den Grundkörper erstrecken. Selbstverständlich sind für einzelne, mehrere oder sämtliche Freiräume Ausnahmen nach oben oder unten möglich.

Ein entsprechender Freiraum erhöht das Deformationsvermögen des Grundkörpers der Deformationsstruktur und somit der Deformationsstruktur, insbesondere gegenüber ohne entsprechende Freiräume und somit kompakt ausgebildeten Deformationsstrukturen, erheblich. Ein entsprechender Freiraum reduziert sonach auch die eingangs erwähnte Restblocklänge erheblich. Darüber hinaus bedingt ein entsprechender Freiraum eine Gewichtsreduzierung des Strukturbauteils. Insgesamt liegt damit ein verbessertes Strukturbauteil für ein Kraftfahrzeug vor.

Typischerweise weist der Grundkörper mehrere entsprechende Freiräume auf. Entsprechende Freiräume können in paralleler oder nicht paralleler Anordnung und/oder Ausrichtung vorhanden sein. Entsprechende Freiräume können in regelmäßiger oder unregelmäßiger Anordnung und/oder Ausrichtung vorhanden sein. Es ist möglich, den Grundkörper gedanklich in unterschiedliche Bereiche bzw. Volumina aufzuteilen und erste Bereiche bzw. Volumina des Grundkörpers mit einer ersten Anzahl, Anordnung und/oder Ausrichtung entsprechender Freiräume auszubilden und weitere Bereiche bzw. Volumina des Grundkörpers mit einer von der ersten verschiedenen zweiten Anzahl, Anordnung und/oder Ausrichtung entsprechender Freiräume auszubilden. Derart können durch die gezielte bereichs- bzw. volumenmäßige Auswahl von Anzahl, Anordnung und/oder Ausrichtung entsprechender Freiräume maßgeschneiderte Deformationseigenschaften des Grundkörpers und somit der Deformationsstruktur erhalten werden.

Ein entsprechender Freiraum ist typischerweise durch, insbesondere querschnittlich betrachtet fingerartig bzw. -förmig respektive zinnenartig bzw. -förmig, frei endend ausgebildete Grundkörperabschnitte begrenzt. Insofern kann auch ein entsprechender Freiraum querschnittlich betrachtet fingerartig bzw. -förmig respektive zinnenartig bzw. -förmig ausgebildet sein. Der Grundkörper kann sonach einen z. B. block- oder quaderartig ausgebildeten ersten Grundkörperabschnitt aufweisen, von welchem, insbesondere querschnittlich betrachtet fingerartig bzw. -förmig respektive zinnenartig bzw. -förmig, frei endend ausgebildete zweite Grundkörperabschnitte abragen, welche entsprechende Freiräume begrenzen. Die erwähnte, gegebenenfalls zylindrische, bohrungsartige bzw. - förmige Gestalt der Freiräume bzw. der die Freiräume bildenden länglichen Ausnehmungen in dem Grundkörper resultiert sonach typischerweise aus den die Freiräume begrenzenden frei endend ausgebildeten Grundkörperabschnitten.

Wie erwähnt, kann die Überführung der Deformationsstruktur von dem ersten Deformationszustand in den zweiten Deformationszustand strukturbedingt vordefinierbar bzw. vordefiniert sein. Das Strukturbauteil kann sonach eine vordefinierbare oder vordefinierte Deformationsrichtung aufweisen. Die Deformationseigenschaften der Deformationsstruktur können verbessert werden, wenn die Freiräume sich in oder parallel zu der Deformationsrichtung erstreckend angeordnet bzw. ausgebildet sind. Die Freiräume sind entsprechend typischerweise sich in oder parallel zu der Deformationsrichtung erstreckend angeordnet bzw. ausgebildet. Die Deformationsrichtung des Strukturbauteils fällt typischerweise mit einer die Höhe des Grundkörpers definierenden Raumrichtung zusammen.

Um eine gute Einleitung von crash- bzw. kollisionsbedingt entstehenden Kräften und hieraus resultierender Deformationsenergie in die Deformationsstruktur zu gewährleisten, kann an dem Grundkörper, insbesondere an einem eine (bezogen auf einen Montagezustand des Strukturbauteils) Ober- oder Unterseite des Grundkörpers bildenden Grundkörperabschnitt, wenigstens ein Krafteinleitungselement befestigt sein. Ein entsprechendes Krafteinleitungselement ist in seinen strukturellen Eigenschaften typischerweise so beschaffen, dass dieses im Vergleich zu der Deformationsstruktur ein geringeres Deformationsvermögen aufweist. Ein entsprechendes Krafteinleitungselement weist typischerweise eine, gegebenenfalls deutlich, höhere Festigkeit und Steifigkeit als die Deformationsstruktur auf. Ein entsprechendes Krafteinleitungselement kann unmittelbar oder mittelbar, d. h. unter Zwischenschaltung wenigstens einer Funktionsschicht an dem Grundkörper befestigt sein. Bei einer Funktionsschicht kann es sich insbesondere um eine die Haftung zwischen dem Krafteinleitungselement und dem Grundkörper erzeugende oder fördernde Haftvermittlerschicht, d. h. z. B. um eine haftvermittelnde Klebeschicht, und/oder um eine, z. B. aus einem Verstärkungsmaterial bzw. einer Verstärkungsmaterialstruktur gebildete Verstärkungsschicht, d. h. z. B. um eine Textilschicht, metallische Blechschicht, etc., handeln.

Selbstverständlich können zur Erzeugung oder Förderung der Haftung zwischen dem Krafteinleitungselement und dem Grundkörper alternativ oder ergänzend auch zumindest abschnittsweise Haftungserzeugende bzw. -fördernde, insbesondere dreidimensionale, Strukturierungen der Oberfläche des Krafteinleitungselements und/oder des Grundkörpers vorgesehen sein.

Auch ein lokales stoffschlüssiges Verbinden, d. h. insbesondere ein lokales Verschweißen, des Krafteinleitungselements und des Grundkörpers ist bei entsprechender Aufbringung von Druck und/oder Temperatur denkbar. Hierbei können sich gegebenenfalls die thermoplastischen Eigenschaften des Grundkörpers zunutze gemacht werden.

Zweckmäßig ist ein entsprechendes Krafteinleitungselement sowohl an einer Ober- als auch einer Unterseite des Grundkörpers befestigt. Es ergibt sich sonach ein Sandwich-Aufbau des Strukturbauteils, welcher jeweilige Krafteinleitungselemente als Deckschichten bzw. -lagen und die Deformationsstruktur als Zwischenschicht bzw. -lage beinhaltet.

Entsprechende Krafteinleitungselemente sind, um eine möglichst gute Kraftaufnahme und - einleitung zu gewährleisten, typischerweise als flächige Flächenelemente aus einem, insbesondere metallischen, Kompaktmaterial ausgebildet. Konkret können entsprechende Krafteinleitungselementen z. B. als metallische Bleche ausgebildet sein oder solche umfassen.

Bezüglich der materialmäßigen Ausbildung des Grundkörpers der Deformationsstruktur wurde bereits erwähnt, dass dieser grundsätzlich aus jedwedem deformierbaren, eine offen- bzw. geschlossenzellige Schaumstruktur umfassenden Schaummaterial gebildet sein kann. In diesem Zusammenhang wurden offen- bzw. geschlossenzellige Metall- oder Kunststoffschäume als Beispiele für entsprechende Schaummaterialien genannt. Dabei sind Kunststoffschäume typischerweise bevorzugt. Kunststoffschäume können z. B. durch einen chemisch und/oder physikalisch induzierten Schäumvorgang gebildet sein; bei auf einem Kunststoff basierenden Schaummaterialien kann es sich demnach insbesondere um, insbesondere auf thermoplastischen Kunststoffmaterialien basierende, chemisch und/oder physikalisch geschäumte Kunststoffschäume handeln. Kunststoffschäume können jedoch auch durch Expansion eines expandierbaren Kunststoffpartikelmaterials gebildet sein; bei auf einem Kunststoff basierenden Schaummaterialien kann es sich demnach auch um, insbesondere auf thermoplastischen Kunststoffmaterialien basierende, Kunststoffpartikelschäume handeln. In allen Fällen kann die für die Energieaufnahmeeigenschaften wesentliche Struktur des Schaummaterials durch Zugabe von Nukleierungsmitteln gezielt eingestellt werden. In allen Fällen sollte das Schaummaterial zweckmäßig eine um 30% oder mehr reduzierte Dichte im Vergleich zu dem jeweiligen Kompaktmaterial aufweisen.

Das Schaummaterial kann wenigstens ein zur Aufnahme von crash- bzw. kollisionsbedingt entstehender Deformationsenergie ausgebildetes deformierbares Deformationsmaterial umfassen. Die, z. B. in Form eines Füllstoffs realisierte, Zugabe eines entsprechenden Deformationsmaterials verbessert die Aufnahmeeigenschaften von crash- bzw. kollisionsbedingt entstehender Deformationsenergie der Deformationsstruktur weiter. Ein entsprechendes Deformationsmaterial kann z. B. als Hohlkugeln, Crashenergie-absorbierendes Granulat, etc. ausgebildet sein bzw. solche(s) umfassen.

Die Erfindung betrifft neben dem Strukturbauteil auch eine Strukturbauteilanordnung für ein Kraftfahrzeug. Die Strukturbauteilanordnung ist zur Aufnahme von crash- bzw. kollisionsbedingt entstehender Deformationsenergie ausgebildet und zeichnet sich dadurch aus, dass sie wenigstens ein wie beschriebenes Strukturbauteil sowie wenigstens ein weiteres Bauteil bzw. wenigstens eine weitere Bauteilgruppe umfasst. Sämtliche Ausführungen im Zusammenhang mit dem Strukturbauteil gelten analog für die Strukturbauteilanordnung.

Der Grundkörper des wenigstens einen Strukturbauteils kann dabei mittelbar oder unmittelbar an einem weiteren Bauteil der Strukturbauteilanordnung, insbesondere einem Gehäuse einer Funktionskomponente, bevorzugt eines elektrischen Energiespeichers (Batterie), eines Kraftfahrzeugs, befestigt sein. Die Befestigung des Grundkörpers der Deformationsstruktur an einem entsprechenden Bauteil der Strukturbauteilanordnung kann die im Zusammenhang mit dem Strukturbauteil beschriebene mögliche Befestigung eines Krafteinleitungselements hinfällig machen, da das Bauteil der Strukturbauteilanordnung die im Zusammenhang mit dem Strukturbauteil beschriebene Funktion des Krafteinleitungselements übernehmen kann. Wie erwähnt, handelt es sich bei dem Bauteil der Strukturbauteilanordnung insbesondere um ein Gehäuse einer Funktionskomponente, bevorzugt eines elektrischen Energiespeichers, eines Kraftfahrzeugs, welches Gehäuse in struktureller Hinsicht typischerweise derart stabil ausgeführt ist, dass es der beschriebenen Funktion eines Krafteinleitungselements ohne Weiteres nachkommen kann.

Weiterhin betrifft die Erfindung ein Kraftfahrzeug, insbesondere einen Personenkraftwagen, welcher sich dadurch auszeichnet, dass er wenigstens ein wie beschriebenes Strukturbauteil und/oder wenigstens eine wie beschriebene Strukturbauteilanordnung umfasst. Sämtliche Ausführungen im Zusammenhang mit dem Strukturbauteil und/oder der Strukturbauteilanordnung gelten analog für das Kraftfahrzeug.

Das Strukturbauteil kann als Karosserie verstärkendes, insbesondere versteifendes, Karosserieelement der Karosserie des Kraftfahrzeugs angeordnet oder ausgebildet sein. Das Strukturbauteil kann demnach im in einer Karosserie des Kraftfahrzeugs verbauten Zustand zur Verstärkung bzw. Versteifung von Karosserieelementen, d. h. z. B. Knoten oder Profilen, der Karosserie des Kraftfahrzeugs dienen und entsprechend ausgebildet sein.

Die Erfindung ist anhand von Ausführungsbeispielen in den Zeichnungen näher erläutert. Dabei zeigt:
- Fig. 1, 2: je eine Prinzipdarstellung eines Strukturbauteils für ein Kraftfahrzeug gemäß einem Ausführungsbeispiel; und
- Fig. 3: eine Prinzipdarstellung eines Strukturbauteils für ein Kraftfahrzeug gemäß einem weiteren Ausführungsbeispiel.

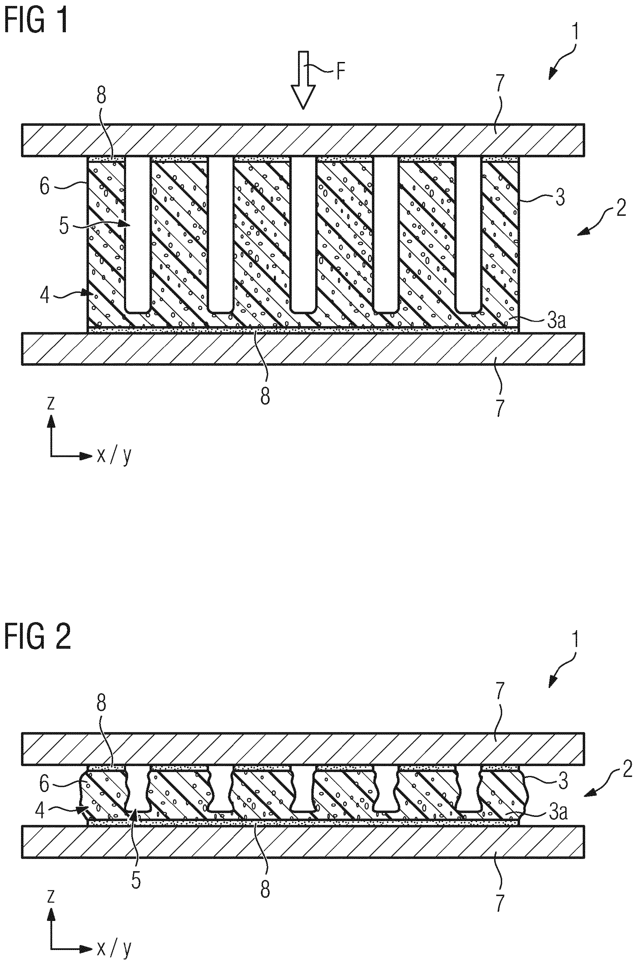

Die Fig. 1, 2 zeigen je eine Prinzipdarstellung eines Strukturbauteils 1 für ein Kraftfahrzeug gemäß einem Ausführungsbeispiel in einer (quer)geschnittenen Ansicht.

Das Strukturbauteil 1 dient zur Aufnahme von crash- bzw. kollisionsbedingt, d. h. im Falle eines Crashs bzw. einer Kollision eines mit dem Strukturbauteil 1 ausgestatteten Kraftfahrzeugs, entstehender Deformationsenergie. Das Strukturbauteil 1 umfasst hierfür eine zur Aufnahme von crash- bzw. kollisionsbedingt entstehender Deformationsenergie ausgebildete Deformationsstruktur 2. Die Deformationsstruktur 2 ist bei Einleitung von crash- bzw. kollisionsbedingt entstehender Deformationsenergie von einem in Fig. 1 gezeigten ersten Deformationszustand, d. h. einem undeformierten Zustand, in einen in Fig. 2 gezeigten zweiten Deformationszustand, d. h. einen gegenüber dem ersten Deformationszustand deformierten Zustand, überführbar. Ersichtlich geht die Deformation mit einer Komprimierung der Deformationsstruktur 2, insbesondere in Richtung der, wie durch den Pfeil F angedeutet, eingeleiteten Deformationsenergie, einher.

Die Deformationsstruktur 2 umfasst einen durch ein deformierbares, eine offen- bzw. geschlossenzellige Schaumstruktur umfassendes Schaummaterial 4 gebildeten Grundkörper 3.

Bei dem Schaummaterial 4 kann es sich z. B. um einen offen- bzw. geschlossenzelligen Metall- oder Kunststoffschaum handeln. In dem in den Fig. gezeigten Ausführungsbeispielen handelt es sich bei dem Schaummaterial 4 beispielhaft um einen Kunststoffschaum. Der Kunststoffschaum ist z. B. durch Expansion eines auf einem thermoplastischen Kunststoffmaterial basierenden expandierbaren Kunststoffpartikelmaterials gebildet; bei dem Schaummaterial 4 handelt es sich demnach um einen Kunststoffpartikelschaum.

Das Schaummaterial 4 kann wenigstens ein zur Aufnahme von crash- bzw. kollisionsbedingt entstehender Deformationsenergie ausgebildetes deformierbares Deformationsmaterial umfassen. Ein entsprechendes Deformationsmaterial kann z. B. als Hohlkugeln, Crashenergie-absorbierendes Granulat, etc. ausgebildet sein bzw. solche(s) umfassen. Die für die Energieaufnahmeeigenschaften des Schaummaterials 4 wesentliche Struktur des Schaummaterials 4 kann durch Zugabe von Nukleierungsmitteln gezielt eingestellt worden sein.

Der Grundkörper 3 der Deformationsstruktur 2 ist im Hinblick auf seine Aufnahmeeigenschaften von crash- bzw. kollisionsbedingt entstehender Deformationsenergie verbessert ausgeführt, als dieser mehrere sich jeweils als bohrungsartige bzw. -förmige längliche Ausnehmung zumindest abschnittsweise durch den Grundkörper 3 erstreckend ausgebildete Freiräume 5 aufweist. Ersichtlich sind jeweilige Freiräume 5 einseitig offen ausgebildet, d. h. jeweilige Freiräume 5 erstrecken sich von einer Außenseite des Grundkörpers 3, d. h. in den in den Fig. gezeigten Ausführungsbeispielen der Oberseite des Grundkörpers 3, in das Innere des Grundkörpers 3 bzw. vom Inneren des Grundkörpers 3 bis zu einer Außenseite des Grundkörpers 3. Die Freiräume 5 sind sich in Richtung einer Deformationsrichtung (z-Richtung) des Strukturbauteils 1 erstreckend angeordnet bzw. ausgebildet.

Anhand von Fig. 1 ist ersichtlich, dass ein jeweiliger Freiraum 5 durch querschnittlich betrachtet fingerartig bzw. -förmig respektive zinnenartig bzw. -förmig frei endend ausgebildete Grundkörperabschnitte 6 begrenzt ist. Der Grundkörper 3 weist sonach einen block- oder quaderartig ausgebildeten ersten Grundkörperabschnitt 3a auf, von welchem querschnittlich betrachtet fingerartig bzw. -förmig respektive zinnenartig bzw. -förmig frei endend ausgebildete zweite Grundkörperabschnitte 6 abragen, welche entsprechende Freiräume 5 begrenzen. Die erwähnte bohrungsartige bzw. -förmige Gestalt der Freiräume 5 bzw. der die Freiräume 5 bildenden länglichen Ausnehmungen in dem Grundkörper 3 resultiert sonach aus den die Freiräume 5 begrenzenden frei endend ausgebildeten Grundkörperabschnitten 6.

Jeweilige Freiräume 5 können sich bezogen auf ein Längen-, Breiten-, oder Höhenmaß des Grundkörpers 3 z. B. wenigstens 20%, insbesondere 20 - 50%, bevorzugt 50%, besonders bevorzugt mehr als 50%, durch den Grundkörper 3 erstreckend ausgebildet sein. In den in den Fig. gezeigten Ausführungsbeispielen erstrecken sich die Freiräume 5 in einer die Höhe des Grundkörpers 3 definierenden Raumrichtung (z-Richtung) beispielhaft um mehr als 50% der Höhe des Grundkörpers 3 durch den Grundkörper 3.

Anhand der in den Fig. gezeigten Ausführungsbeispiele ist ersichtlich, dass die Freiräume 5 in paralleler Anordnung und/oder Ausrichtung vorhanden sein können. Grundsätzlich gilt, dass entsprechende Freiräume 5 in paralleler oder nicht paralleler sowie in regelmäßiger oder unregelmäßiger Anordnung und/oder Ausrichtung vorhanden sein können. Es ist möglich, den Grundkörper 3 gedanklich in unterschiedliche Bereiche bzw. Volumina aufzuteilen und erste Bereiche bzw. Volumina des Grundkörpers 3 mit einer ersten Anzahl, Anordnung und/oder Ausrichtung entsprechender Freiräume 5 auszubilden und weitere Bereiche bzw. Volumina des Grundkörpers 3 mit einer von der ersten verschiedenen zweiten Anzahl, Anordnung und/oder Ausrichtung entsprechender Freiräume 5 auszubilden. Derart können durch die gezielte bereichs- bzw. volumenmäßige Auswahl von Anzahl, Anordnung und/oder Ausrichtung entsprechender Freiräume 5 maßgeschneiderte Deformationseigenschaften des Grundkörpers 3 und somit der Deformationsstruktur 2 erhalten werden.

Um eine gute Einleitung von crash- bzw. kollisionsbedingt entstehenden Kräften und hieraus resultierender Deformationsenergie in die Deformationsstruktur 2 zu gewährleisten, sind an dem Grundkörper 3, d. h. an eine Ober- und Unterseite des Grundkörpers 3 bildenden Grundkörperabschnitten, jeweils Krafteinleitungselemente 7 befestigt. Bei den Krafteinleitungselementen 7 handelt es sich um flächige Flächenelemente. Es ergibt sich sonach ein Sandwich-Aufbau des Strukturbauteils 1, welcher jeweilige Krafteinleitungselemente 7 als Deckschichten bzw. -lagen und die Deformationsstruktur 2 als Zwischenschicht bzw. -lage beinhaltet.

Die Krafteinleitungselemente 7 sind in ihren strukturellen Eigenschaften so beschaffen, dass diese im Vergleich zu der Deformationsstruktur 2 ein geringeres Deformationsvermögen aufweisen. Die Krafteinleitungselemente 7 weisen damit eine, gegebenenfalls deutlich, höhere Festigkeit und Steifigkeit als die Deformationsstruktur 2 auf. Konkret handelt es sich bei den Krafteinleitungselementen 7 z. B. um aus einem metallischen Material (Kompaktmaterial) ausgebildete metallische Bleche.

In den in den Fig. gezeigten Ausführungsbeispielen sind die Krafteinleitungselemente 7 mittelbar, d. h. unter Zwischenschaltung wenigstens einer Funktionsschicht 8 an dem Grundkörper 3 befestigt. Bei der grundsätzlich optionalen Funktionsschicht 8 kann es sich z. B. um eine die Haftung zwischen einem Krafteinleitungselement 7 und dem Grundkörper 3 erzeugende oder fördernde Haftvermittlerschicht, d. h. z. B. um eine haftvermittelnde Klebeschicht, und/oder um eine, z. B. aus einem Verstärkungsmaterial bzw. einer Verstärkungsmaterialstruktur gebildete Verstärkungsschicht, d. h. z. B. um eine Textilschicht, eine metallische Blechschicht, etc., handeln. Selbstverständlich ist, insbesondere bei entsprechender chemischer Verträglichkeit der einander kontaktierenden Oberflächen, prinzipiell auch eine unmittelbare Befestigung der Krafteinleitungselemente 7 an dem Grundkörper 3 denkbar.

Zur Erzeugung bzw. Förderung der Haftung zwischen dem Krafteinleitungselement 7 und dem Grundkörper 3 können alternativ oder ergänzend auch zumindest abschnittsweise Haftungserzeugende bzw. -fördernde, insbesondere dreidimensionale, Strukturierungen der Oberfläche des Krafteinleitungselements 7 und/oder des Grundkörpers 3 vorgesehen sein.

Auch ein lokales stoffschlüssiges Verbinden, d. h. insbesondere ein lokales Verschweißen, des Krafteinleitungselements 7 und des Grundkörpers 3 ist bei entsprechender Aufbringung von Druck und/oder Temperatur denkbar. Hierbei können sich gegebenenfalls die thermoplastischen Eigenschaften des Grundkörpers zunutze gemacht werden.

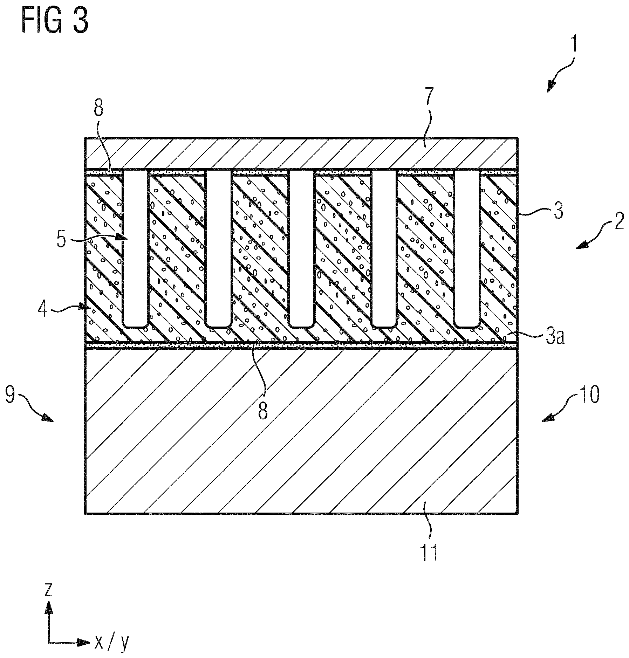

Fig. 3 zeigt eine Prinzipdarstellung eines Strukturbauteils 1 für ein Kraftfahrzeug gemäß einem weiteren Ausführungsbeispiel in einer (quer)geschnittenen Ansicht.

Anhand von Fig. 3 ist ersichtlich, dass ein Strukturbauteil 1 einen Bestandteil einer Strukturbauteilanordnung 9 für ein Kraftfahrzeug bilden kann. Die Strukturbauteilanordnung 9 ist zur Aufnahme von crash- bzw. kollisionsbedingt entstehender Deformationsenergie ausgebildet und umfasst neben einem Strukturbauteil 1 wenigstens ein weiteres Bauteil 10 bzw. wenigstens eine weitere Bauteilgruppe. Bei dem weiteren Bauteil 10 bzw. der weiteren Bauteilgruppe handelt es sich z. B. um einen ein Gehäuse 11 umfassenden elektrischen Energiespeicher, d. h. eine Batterie.

Ersichtlich ist der Grundkörper 3 der Deformationsstruktur 2 des Strukturbauteils 1 an dem Gehäuse 11 des weiteren Bauteils 10 befestigt. Die Befestigung des Grundkörpers 3 der Deformationsstruktur 2 an dem Gehäuse 11 kann die beschriebene mögliche Befestigung eines Krafteinleitungselements 7 hinfällig machen, da das Gehäuse 11 des weiteren Bauteils 10 die beschriebene Funktion des Krafteinleitungselements 7 übernehmen kann. Das Gehäuse 11 ist in struktureller Hinsicht typischerweise derart stabil ausgeführt, dass es der beschriebenen Funktion eines Krafteinleitungselements 7 ohne Weiteres nachkommen kann. Das Strukturbauteil 1 kann in einem in einer Karosserie eines Kraftfahrzeugs, d. h. insbesondere eines Personenkraftwagens, verbauten Zustand als Karosserie verstärkendes, insbesondere versteifendes, Karosserieelement der Karosserie des Kraftfahrzeugs angeordnet oder ausgebildet sein. Das Strukturbauteil 1 kann demnach im in einer Karosserie des Kraftfahrzeugs verbauten Zustand zur Verstärkung bzw. Versteifung von Karosserieelementen, d. h. z. B. Knoten oder Profilen, der Karosserie des Kraftfahrzeugs dienen und entsprechend ausgebildet sein.

## Patentansprüche

1. Strukturbauteil (1) für ein Kraftfahrzeug, umfassend eine zur Aufnahme von crashbedingt entstehender Deformationsenergie ausgebildete Deformationsstruktur (2), welche bei Einleitung von crashbedingt entstehender Deformationsenergie von einem ersten Deformationszustand in einen zweiten Deformationszustand überführbar ist, wobei die Deformationsstruktur (2) einen durch ein Schaummaterial (4) gebildeten Grundkörper (3) umfasst, **dadurch gekennzeichnet, dass**
- der Grundkörper (3) wenigstens einen sich als längliche Ausnehmung zumindest abschnittsweise durch diesen erstreckend ausgebildeten Freiraum (5) aufweist, wobei der Freiraum (5) das Deformationsvermögen des Grundkörpers (3) erhöht und
- an dem Grundkörper (3) wenigstens ein Krafteinleitelement (7) befestigt ist.

2. Strukturbauteil nach Anspruch 1, **dadurch gekennzeichnet, dass** der wenigstens eine Freiraum (5) durch, insbesondere querschnittlich betrachtet finger- oder zinnenartig, frei endend ausgebildete Grundkörperabschnitte (6) begrenzt ist.

3. Strukturbauteil nach Anspruch 1 oder 2, **dadurch gekennzeichnet, dass** das Strukturbauteil (1) eine vordefinierbare oder vordefinierte Deformationsrichtung, insbesondere Komprimierungsrichtung, aufweist, wobei der wenigstens eine Freiraum (5) sich in oder parallel zu der Deformationsrichtung erstreckend ausgebildet ist.

4. Strukturbauteil nach einem der vorhergehenden Ansprüche, **dadurch gekennzeichnet, dass** sich der wenigstens eine Freiraum (5) bezogen auf ein Längen-, Breiten-, oder Höhenmaß des Grundkörpers (3) wenigstens 20%, insbesondere 20 - 50%, bevorzugt 50%, besonders bevorzugt mehr als 50%, durch den Grundkörper (3) erstreckend ausgebildet ist.

5. Strukturbauteil nach einem der vorhergehenden Ansprüche, **dadurch gekennzeichnet, dass** der Grundkörper (3) mehrere sich jeweils als längliche Ausnehmung zumindest abschnittsweise durch diesen erstreckend ausgebildete Freiräume (5) aufweist, wobei wenigstens zwei Freiräume (5) parallel angeordnet oder ausgebildet sind.

6. Strukturbauteil nach einem der vorhergehenden Ansprüche, **gekennzeichnet durch** wenigstens ein an dem Grundkörper (3) an einem eine Ober- oder Unterseite des Grundkörpers (3) bildenden Grundkörperabschnitt unmittelbar oder mittelbar unter Zwischenschaltung wenigstens einer Funktionsschicht (8), insbesondere einer eine Haftung erzeugenden oder fördernden Haftvermittlerschicht und/oder einer Verstärkungsschicht, befestigtes Krafteinleitungselement (7).

7. Strukturbauteil nach einem der vorhergehenden Ansprüche, **gekennzeichnet durch** wenigstens ein an einem eine Oberseite des Grundkörpers (3) bildenden Grundkörperabschnitt befestigtes erstes Krafteinleitungselement (7) und wenigstens ein an einem eine Unterseite des Grundkörpers (3) bildenden Grundkörperabschnitt befestigtes zweites Krafteinleitungselement (7).

8. Strukturbauteil nach einem der vorhergehenden Ansprüche, **dadurch gekennzeichnet, dass** das Krafteinleitungselement (7) als ein Flächenelement aus einem, insbesondere metallischen, Kompaktmaterial ausgebildet ist oder wenigstens ein solches umfasst.

9. Strukturbauteil nach einem der vorhergehenden Ansprüche, **dadurch gekennzeichnet, dass** das Schaummaterial (4) als ein offen- oder geschlossenzelliger Metall- oder Kunststoffschaum ausgebildet ist oder wenigstens einen solchen umfasst.

10. Strukturbauteil nach Anspruch 9, **dadurch gekennzeichnet, dass** das Schaummaterial (4) ein Kunststoffschaum ist, wobei
der Kunststoffschaum durch einen chemisch und/oder physikalisch induzierten Schäumvorgang gebildet ist, oder
der Kunststoffschaum durch Expansion eines expandierbaren Kunststoffpartikelmaterials gebildet ist.

11. Strukturbauteil nach einem der vorhergehenden Ansprüche, **dadurch gekennzeichnet, dass** das Schaummaterial (4) wenigstens ein zur Aufnahme von bei einer crashbedingten Deformation entstehender Deformationsenergie ausgebildetes Deformationsmaterial umfasst.

12. Strukturbauteilanordnung (9) für ein Kraftfahrzeug, wobei die Strukturbauteilanordnung (9) zur Aufnahme von crashbedingt entstehender Deformationsenergie ausgebildet ist, **dadurch gekennzeichnet, dass** sie wenigstens ein Strukturbauteil (1) nach einem der vorhergehenden Ansprüche sowie wenigstens ein weiteres Bauteil (10) umfasst.

13. Strukturbauteilanordnung nach Anspruch 12, **dadurch gekennzeichnet, dass** der Grundkörper (3) der Deformationsstruktur (2) des wenigstens einen Strukturbauteils (1) mittelbar oder unmittelbar an einem weiteren Bauteil (10) der Strukturbauteilanordnung (9), insbesondere einem Gehäuse (11) einer Funktionskomponente, bevorzugt eines elektrischen Energiespeichers, eines Kraftfahrzeugs, befestigt ist.

14. Kraftfahrzeug, umfassend wenigstens ein Strukturbauteil (1) nach einem der Ansprüche 1 bis 11 und/oder wenigstens eine Strukturbauteilanordnung (9) nach einem der Ansprüche 12 oder 13.

## Claims

1. Structural component (1) for a motor vehicle, comprising a deformation structure (2) which is designed for absorbing crash-induced deformation energy and can be transferred from a first deformation state into a second deformation state on introduction of crash-induced deformation energy, wherein the deformation structure (2) comprises a base body (3) formed by a foam material (4), **characterised in that**
- the base body (3) has at least one free space (5) formed as an elongated recess extending at least in sections through the latter, wherein the free space (5) increases the deformation ability of the base body (3) and
- at least one force introduction element (7) is fastened to the base body (3).

2. Structural component according to claim 1, **characterised in that** the at least one free space (5) is delimited by freely ending base body sections (6), which are in particular finger-like or crenellated when viewed in cross-section.

3. Structural component according to claim 1 or 2, **characterised in that** the structural component (1) has a predefinable or predefined deformation direction, in particular compression direction, wherein the at least one free space (5) is formed to extend in deformation direction or parallel to the deformation direction.

4. Structural component according to any of the preceding claims, **characterised in that** the at least one free space (5) is designed to extend through the base body (3) by at least 20%, in particular 20 - 50%, preferably 50%, particularly preferably more than 50%, in relation to a length, width or height dimension of the base body (3).

5. Structural component according to any of the preceding claims, **characterised in that** the base body (3) has a plurality of free spaces (5) each formed as an elongated recess extending at least in sections through the latter, wherein at least two free spaces (5) are arranged or formed in parallel.

6. Structural component according to any of the preceding claims, **characterised by** at least one force introduction element (7) fastened directly or indirectly to the base body (3) on a base body section forming an upper side or lower side of the base body (3) with the interconnection of at least one functional layer (8), in particular a binding agent layer producing or promoting adhesion and/or a reinforcing layer.

7. Structural component according to any of the preceding claims, **characterised by** at least one first force introduction element (7) fastened to a base body section forming an upper side of the base body (3) and at least one second force introduction element (7) fastened to a base body section forming a lower side of the base body (3).

8. Structural component according to any of the preceding claims, **characterised in that** the force introduction element (7) is designed as a surface element made from a compact material, in particular a metallic compact material, or at least comprises such a material.

9. Structural component according to any of the preceding claims, **characterised in that** the foam material (4) is designed as an open-cell or closed-cell metal or plastic foam or at least comprises such a foam.

10. Structural component according to claim 9, **characterised in that** the foam material (4) is a plastic foam, wherein
the plastic foam is formed by a chemically and/or physically induced foaming process, or
the plastic foam is formed by expansion of an expandable plastic particle material.

11. Structural component according to any of the preceding claims, **characterised in that** the foam material (4) comprises at least one deformation material designed to absorb deformation energy generated during a crash-related deformation.

12. Structural component arrangement (9) for a motor vehicle, wherein the structural component arrangement (9) is designed for absorbing deformation energy caused as the result of a crash, **characterised in that** it comprises at least one structural component (1) according to any of the preceding claims and at least one further component (10).

13. Structural component arrangement according to claim 12, **characterised in that** the base body (3) of the deformation structure (2) of the at least one structural component (1) is fastened indirectly or directly to a further component (10) of the structural component arrangement (9), in particular a housing (11) of a functional component, preferably an electrical energy store, of a motor vehicle.

14. Motor vehicle, comprising at least one structural component (1) according to any of claims 1 to 11 and/or at least one structural component arrangement (9) according to any of claims 12 or 13.

## Revendications

1. Composant structural (1) pour un véhicule automobile, comprenant une structure de déformation (2) réalisée pour absorber l'énergie de déformation résultant d'une collision et peut passer d'un premier état de déformation à un second état de déformation lors de l'introduction de l'énergie de déformation résultant d'une collision, dans lequel la structure de déformation (2) comprend un corps de base (3) formé d'un matériau en mousse (4), **caractérisé en ce que**
- le corps de base (3) présente au moins un espace libre (5) réalisé de manière à s'étendre au moins par sections à travers ledit corps de base sous la forme d'un évidement allongé, dans lequel l'espace libre (5) augmente la déformabilité du corps de base (3) et
- au moins un élément d'introduction de force (7) est fixé au corps de base (3).

2. Composant structural selon la revendication 1, **caractérisé en ce que** le au moins un espace libre (5) est délimité par des sections de corps de base (6) réalisées de manière à présenter des extrémités libres digitées ou crénelées, en particulier lorsque lesdites sections sont considérées en coupe transversale.

3. Composant structural selon la revendication 1 ou 2, **caractérisé en ce que** le composant structural (1) présente une direction de déformation, en particulier une direction de compression, prédéfinie ou pouvant être prédéfinie, dans lequel le au moins un espace libre (5) est réalisé de manière à s'étendre dans la direction de déformation ou parallèlement à celle-ci.

4. Composant structural selon l'une quelconque des revendications précédentes, **caractérisé en ce que** le au moins un espace libre (5) est réalisé de manière à s'étendre à travers le corps de base (3) à raison d'au moins 20 %, en particulier de 20 à 50 %, de préférence 50 %, le plus préférentiellement de plus de 50 %, par rapport à une dimension en longueur, en largeur ou en hauteur du corps de base (3).

5. Composant structural selon l'une quelconque des revendications précédentes, **caractérisé en ce que** le corps de base (3) présente plusieurs espaces libres (5) réalisés de manière à s'étendre au moins par sections et respectivement sous la forme d'un évidement allongé à travers ledit corps de base, dans lequel au moins deux espaces libres (5) sont agencés ou réalisés de manière parallèle.

6. Composant structural selon l'une quelconque des revendications précédentes, **caractérisé par** au moins un élément d'introduction de force (7) fixé au corps de base (3) au niveau d'une section de corps de base formant une face supérieure ou inférieure du corps de base (3), directement ou indirectement avec interposition d'au moins une couche fonctionnelle (8), en particulier d'une couche fournissant ou favorisant une adhérence et/ou d'une couche de renforcement.

7. Composant structural selon l'une quelconque des revendications précédentes, **caractérisé par** au moins un premier élément d'introduction de force (7) fixé au niveau d'une section de corps de base formant une face supérieure du corps de base (3) et par au moins un second élément d'introduction de force (7) fixé au niveau d'une section de corps de base formant une face inférieure du corps de base (3).

8. Composant structural selon l'une quelconque des revendications précédentes, **caractérisé en ce que** l'élément d'introduction de force (7) est réalisé sous la forme d'un élément plan en un matériau compact, en particulier métallique, ou comprend au moins un tel matériau.

9. Composant structural selon l'une quelconque des revendications précédentes, **caractérisé en ce que** le matériau en mousse (4) est réalisé sous la forme d'une mousse de métal ou de matière plastique à cellules ouvertes ou fermées ou comprend au moins une telle mousse.

10. Composant structural selon la revendication 9, **caractérisé en ce que** le matériau en mousse (4) est une mousse de plastique, dans lequel
la mousse de plastique est formée grâce à un procédé de moussage induit de manière chimique et/ou physique, ou
la mousse en plastique est formée grâce à l'expansion d'un matériau expansible à base de particules de plastique.

11. Composant structural selon l'une quelconque des revendications précédentes, **caractérisé en ce que** le matériau en mousse (4) comprend au moins un matériau de déformation réalisé pour absorber l'énergie de déformation résultant de la déformation provoquée par une collision.

12. Agencement de composant structural (9) pour un véhicule automobile, dans lequel l'agencement de composant structural (9) est réalisé pour absorber l'énergie de déformation résultant d'une collision, **caractérisé en ce qu'**il comprend au moins un composant structural (1) selon l'une quelconque des revendications précédentes et au moins un autre composant structural (10).

13. Agencement de composant structural selon la revendication 12, **caractérisé en ce que** le corps de base (3) de la structure de déformation (2) du au moins un composant structural (1) est fixé directement ou indirectement à un autre composant (10) de l'agencement de composant structural (9), en particulier à un boîtier (11) d'un composant fonctionnel, de préférence d'un accumulateur d'énergie électrique, d'un véhicule automobile.

14. Véhicule automobile, comprenant au moins un composant structural (1) selon l'une quelconque des revendications 1 à 11 et/ou au moins un agencement de composant structural (9) selon la revendication 12 ou 13.
